# EUROPÄISCHE PATENTSCHRIFT

(11) **EP 2 147 602 B1**
(45) Veröffentlichungstag und Bekanntmachung des Hinweises auf die Patenterteilung: **13.07.2011**
(21) Anmeldenummer: 09009420.2
(22) Anmeldetag: 21.07.2009
(51) Int. Cl.: A22C 13/00, D03D 15/08, D06M 11/07, D06M 11/36, D06M 11/38, D06M 11/55, D06M 11/70

(54) **Hülle für Wurst**
Sausage casing
Enveloppe de saucisses

(30) Priorität: 23.07.2008 DE 202008009937 U
(43) Veröffentlichungstag der Anmeldung: 27.01.2010
(73) Patentinhaber: Thiele, Jürgen, 86199 Augsburg (DE)
(72) Erfinder: Thiele, Jürgen, 86199 Augsburg (DE)
(74) Vertreter: Gallo, Wolfgang

(56) Entgegenhaltungen:
- DE-A1- 2 912 892
- DE-A1- 19 812 851
- DE-A1-102005 020 964
- JP-A- 6 093 560
- JP-A- 6 093 561
- US-A- 3 880 582
- US-A- 5 114 786

## Beschreibung

Für Wursthüllen, speziell für Schinkenverpackungen, werden gegenwärtig Polyester-Viskose-Mischungen sowie Reinviskose- und Reinbaumwollstoffe verwendet.

Dabei kommen beispielsweise Konstruktionen zum Einsatz, die aus 85% Viskose und 15% Polyester bestehen, wobei beide Fasern im Garn intim vermischt sind, oder die zu 100% aus Viskosefasern oder zu 100% aus Baumwollfasern bestehen. Bei den Garnen, die bei diesen bekannten Geweben verwendet werden, handelt es sich immer um gesponnene Garne.

Nachteilig ist bei den bisher verwendeten Materialien, dass, was die Viskoseherstellung in den bevorzugten Lieferländern in Asien mit Schwerpunkt China betrifft, erhebliche Bedenken wegen der extrem umweltbelastenden Herstellung bestehen. Des weiteren ist eine gleichbleibende Qualität solcher Materialien nur schwierig darstellbar, weil aus Preisgründen nur sehr minderwertige Fasern zum Einsatz kommen, so dass die technischen Werte wie Garnstärke, Reißwerte, Reißdehnung, Drehung und Anzahl der Einzelfilamente starken Schwankungen unterliegen. Das trifft allerdings grundsätzlich auch auf höherwertige Viskosefasern zu, da es sich dabei immer um gesponnenes Garn handelt, bei dem eine absolute Gleichmäßigkeit verfahrensbedingt nicht erzielt werden kann. Viskose hat auch den Nachteil, dass es beim Brühen, zumal bei der Brühtemperatur, eine stark reduzierte Naßreißfestigkeit hat.

Bei Baumwollfasern besteht das Problem der Schadstofffreiheit, die bei solchen Fasern grundsätzlich nur unter sehr hohem Aufwand und niemals hunderprozentig zu erreichen ist, weil durch den Anbau von Baumwolle in Monokulturen Pestizidrückstände sowie Rückstände von Düngemitteln und andere Verunreinigungen nicht vermeidbar sind. Das trifft allerdings auch auf Viskosefasern zu, wenngleich dort andere Rückstände aus der eher problematischen Herstellung kommen können. Da Wursthüllen Lebensrnittelverpackungen darstellen, ist eine Schadstoffbelastung der Materialien also höchst problematisch.

Hinzu kommt, dass alle gesponnenen Garne zur Vorbereitung für die Weberei grundsätzlich mit Schlichten behandelt werden müssen. Aufgrund der Haarigkeit der eingesetzten Garne müssen hier sehr große Auflagemengen benutzt werden. Die als einziges Schlichtemittel zugelassene Stärke versteift und versprödet außerdem das Garn. Dadurch wird sowohl die Effizienz als auch die Webfehleranfälligkeit sehr nachteilig beeinflusst.

Die Stärken, die als Schlichtemittel eingesetzt werden, werden vornehmlich aus Mais oder Kartoffeln hergestellt. Aufgrund des weltweit um sich greifenden Einsatzes von genmanipulierten Pflanzen in diesen Bereich wird es immer schwierig, dem Erfordernis gerecht zu werden, zu 100 % Stärken zum Einsatz zu bringen, die frei von Genmanipulationen sind. Eine hundertprozentige Entfernung der großen Stärkeauflagen ist schwierig und nicht zu garantieren.

Aus der DE 10 2005 020 964 A1 ist eine fettdichte, als Wursthülle zu verwendende Nahrungsmittelhülle bekannt, die aus einem textilen Trägermaterial besteht und auf der Innenseite mit einer Schicht aus regenerierter oder gefällter Zellulose überzogen ist. Dabei besteht das textile Trägermaterial aus natürlichen Fasern wie Baumwolle, Leinen, Zellwolle, Wolle und/oder Seide und/oder aus synthetischen Fasern wie Polyester, Polyamid, Polyolefin und anderen Polymeren. Die daraus hergestellte künstliche Wursthülle soll mechanisch stabil sein und insbesondere eine höhere Naßreißfestigkeit aufweisen, andererseite aber fettdicht sein. Auf diese bekannte künstliche Wursthülle treffen also auch die obigen Ausführungen zu.

Der Erfindung liegt die Aufgabe zugrunde, den oben aufgezeigten Problemen abzuhelfen, insbesondere die Problematik des Schadstoffgehalts oder der Schadstoffanhaftung von Viskose- oder Baumwollfasern, sowie das Problem der Verwendung von Stärken als Schlichtemittel zu beheben. Dabei ist als wichtiges Kriterium zu beachten, dass das Gewebe auch die Fähigkeit hat, Chemikalien wie beispielsweise Geschmacksverstärker, Raucharomen, Salze usw in üblichen Brühverfahren aufzunehmen. Gerade diese Fähigkeit aber haben Synthetikfasern und somit auch daraus hergestellte Synthetikfasergewebe normalerweise nicht.

Diese Aufgabe wird gemäß der Erfindung durch die in Anspruch 1 beanspruchte Hülle gelöst. Vorteilhafte Ausgestaltungen der Erfindung sind Gegenstand der Unteransprüche.

Erfindungsgemäß ist ein zur Herstellung vor Wursthüllen, insbesondere auch als Schinkenverpackung, bestimmtes Gewebe vorgesehen, das zu 100% aus Synthetikfilamentfasern besteht, da diese bezüglich der Reinheit und der Gleichmäßigkeit erhebliche Vorteile in der gesamten Verarbeitungskette bieten. Gleichzeitig ist es dadurch möglich, eine hundertprozentig dem Lebensmittelrecht entsprechende Qualität zu garantieren. Ein weiterer Vorteil ist, dass das erfindungsgemäß eingesetzte Material preislich interessant ist.

Erfindungsgemäß besteht also das Gewebe für die Herstellung von Wursthüllen oder Schinkenverpackungen zu 100% aus Synthetikfilamentfasern.

Das erfindungsgemäße Gewebe ist besonders ausgebildet und hat die Eigenschaften, die notwendig sind, um die Eignung für den Lebensmittelbereich zu stellen, sowie die Eignung zur Verwendung als Wursthüllen und Schinkenverpackungen herzustellen.

Zu diesen Eigenschaften gehört die Freiheit von Verunreinigungen durch Schadstoffe, wie sie bei Baumwollfasern aufgrund der Düngung oder Behandlung der Baumwollpflanzen schon in der Faser enthalten sein können. Solche Verunreinigungen sind durch die vollständig synthetische Herstellung der verwendeten Fasern ausgeschlossen.

Weiter gehört zu diesen Eigenschaften die Fähigkeit des Gewebes, Wasser und andere Stoffe aufzunehmen und zu binden. Denn die Herstellung von Wurst- und Schinkenwaren umfasst auch das Aufbringen von Chemikalien, wie beispielsweise Geschmacksverstärker, Raucharomen, Salzen usw. auf das als Wursthülle oder Schinkenverpackung benutzte Gewebe, wonach die Wurst- oder Schinkenwaren gebrüht werden, um diese Chemikalien im Brühverfahren kontrolliert an das Füllgut, also an die Wurst oder den Schinken abzugeben. Das Aufbringen solcher Chemikalien erfolgt vom Verwender des Gewebes, wobei zuerst die eine Gewebeseite, die nachher die Außenseite der Verpackung darstellt, mit Acrylat beschichtet wird, um Wasser- und Luftundurchlässigkeit der fertigen Verpackung zu garantieren, und dann auf die andere Seite des Gewebes, welches dann die Innenseite der fertigen Verpackung darstellt, die Chemikalien aufgebracht werden, die dann beim Brühen in die Wurst oder den Schinken eindringen sollen.

Zu den genannten Eigenschaften gehört weiter eine geeignete Dehn- und Schrumpffähigkeit. Zur Verwendung als Wursthülle oder Schinkenverpackung wird aus dem Gewebe ein Schlauch hergestellt. Bei der Konfektionierung wird der angefertigte Schlauch zuerst gedehnt. Beim Trocknen nach dem Brühen schrumpft das Füllgut, nämlich das Wurst- oder Schinkenmaterial, und das Gewebe muss diese Schrumpfung nachvollziehen. Dehnung und Schrumpfung sind allerdings nur im Quersystem, also im Schussgarn, notwendig. In Längsrichtung des Schlauches ist allerdings eine hohe Naßreißfestigkeit erforderlich, also im Kettgarn. Denn das Brühen erfolgt in langen Brühstraßen, in denen die gebrühten Würste noch miteinander verbunden sind, und dort darf kein Reißen auftreten.

Unzureichende Dehnfähigkeit bzw. unzureichendes Schrumpfverhalten und unzureichende Wasser- bzw. Chemikalienaufnahmefähigkeit mögen bisher sächlich dafür gewesen sein, dass die Verwendung reiner Synthetikgarne für Wursthüllen einschl. Schinkenverpackungen nicht in Betracht gezogen wurde. Vor allen Dingen aber haben Synthetikfasern normalerweise nicht die Fähigkeit, irgendwelche Aromastoffe aufzunehmen und an das Brühgut weiterzugeben. Diese Fähigkeit wird erst durch das besonders behandelte, gemäß der Erfindung eingesetzte Synthetikfasergewebe erreicht.

Erfindungsgemäß wird ein eigens entwickeltes Gewebe verwendet, das genau diese Eigenschaften aufweist. Dieses Gewebe besteht beispielsweise zu 100 % aus Polyesterfilamentgarnen. Bei den Polyesterfilamenten, aus denen diese Garne bestehen, handelt es sich im Gegensatz zu den herkömmlicherweise verwendeten Fasern um Endlosfilamente, so dass es sich bei den Garnen also nicht um gesponnene Garne handelt. Die erfindungsgemäß verwendeten Garne sind damit im Gegensatz zu versponnenen Garnen absolut gleichmäßig. Das erfindungsgemäße Gewebe kann beispielsweise aus Polyesterfilamentgarnen mit 75 den texturiert in der Kette, und aus Polyesterfilamentgamen aus modifiziertem Polyester (Polybutylen-Terephthalat) mit 75 den im Schuß zum Einsatz. Das Schußgarn bietet so den Vorteil, dass es die nötige Dehnung und die nötige Rückschrumpfung bei dem oben erwähnten Prozeß der Herstellung der Wurst- und Schinkenprodukte erlaubt.

Das erfindungsgemäße Gewebe wird klassisch gewebt. Sofern ein Schlichten der Garne aus Endlosfilamenten überhaupt erforderlich erscheint, brauchen zum Schlichten keine Stärkematerialien eingesetzt zu werden, wie das bei herkömmlichen Geweben der Fall ist, sondern das Schlichten kann mit Acrylat erfolgen.

Das Gewebe wird nach standardmäßiger Vorbehandlung einem Alkalisierungsschritt unterzogen, in welchem das Gewebe unter nach Zeit und Temperatur kontrollierten Bedingungen einer hohen Alkalikonzentration, vorzugsweise auf der Basis von Natronlauge, ausgesetzt wird, wodurch sich die Oberfläche der Einzelfilamente verändert. Es entstehen darin kraterförmige Ausbuchtungen. Dadurch wird das Aufziehverhalten von Wasser oder Chemikalien stark beschleunigt, und Wasser und Chemikalien können in diesen Zwischenräumen gut gehalten werden. Hieraus resultiert die erforderliche Eigenschaft des Gewebes, Chemikalien der oben erwähnten Art, also Geschmacksverstärker, Raucharomen, Salze usw. aufzunehmen und zu halten, und diese dann im späteren Brühvorgang an die Wurst-oder Schinkenprodukte abzugeben.

Da reine Polyesterfasern im normalen Zustand keinerlei Wasser aufnehmen können und damit auch keine in Wasser gelösten Stoffe aufnehmen und festhalten können, ist der Alkalisierungsschritt notwendig, um das Gewebe für die Herstellung von Wursthüllen geeignet zu machen. Die Dehn- und Schrumpffähigkeit des Schussgarns wird durch diesen Alkalisierungsschritt nicht negativ beeinflusst. Die Reißfestigkeit, die hauptsächlich für das Kettgam (in Längsrichtung) Bedeutung hat, wird dadurch zwar etwas gemindert, aber diese kann durch geeignete Wahl der Fadenzahl und der Fadenstärke des Ausgangsgewebes zweckmäßig eingestellt werden.

Folgende Modifikationen sind ebenfalls möglich:
Statt des reinen Polyester-Garns kann auch ein alkaliresistentes Spandex-Polyester-Mischgarn d.hein, Mischgarn aus Polyester und alkaliresistentem Polyurethan-Polyethylen- glykol-Blockcopolymer (bekannt unter dem Handelsnamen Spandex® , eingesetzt werden, bei dem noch größere Schrumpfinöglichkeiten vorhanden sind. Bei diesem Garn wird ein Polyestergarn mit einem Spandexgummi d.h ein Polyurethan-Polyethylenglykol-Blockcopolymer-Gummi, kombiniert, in dem z.B. abwechselnd mit den Polyesterfilamenten Spandexfäden, d.h. Polyurethan-Polyethylenglykol Blockcopolymer-Fäden zum Einsatz kommen.

Auch bei hochgedrehtem normalem Polyesterfilamentgarn (beispielsweise mit 1650 Touren gedreht) können ähnliche Effekte erreicht werden.

Die verschiedenen Varianten bieten unterschiedliche Vorteile. Damit kann eine große Bandbreite von Anforderungen für unterschiedliche Wurst/Schinken-Füllgutvarianten berücksichtigt werden.

Ähnliche Effekte sind auch mit Polyamidgarnen erreichbar. Hier muß allerdings statt mit Natronlauge in der Nachbehandlung mit starken Säuren gearbeitet werden, die ebenfalls eine Anlösung ähnlich wie bei dem vorbeschriebenen Alkalisierungsprozeß erreichen, um die Aufnahmefähigkeit des Gewebes für Wasser und Aromastoffe, Salze usw. herzustellen.

## Patentansprüche

1. Hülle für Wurst oder andere Fleischwaren in Schlauchform, bestehend aus einem Fasergewebe,
**dadurch gekennzeichnet, dass** die Hülle mindestens nahezu zu 100% aus Synthetikfasem in Gestalt von Synthetikfilametfasern aus Polyester oder aus Polyamid besteht, deren Oberfläche im Falle von Polyesterfasern durch mittels Alkalisierung, oder im Falle von Polyamidfasern durch mittels Säurebehandlung erzeugte kraterförmige Ausbuchtungen verändert ist, um das Gewebe aufnahmefähig für Wasser und Zusatzstoffe wie Geschmacksverstärker, Raucharomen, Salze oder dgl. zu machen.

2. Hülle nach Anspruch 1, wobei die in dem Gewebe verwendeten Filamentgame als Endlosfilamente ausgebildet sind.

3. Hülle nach Anspruch 1 oder 2, wobei das Gewebe aus Polyesterfasern besteht und mittels Natronlauge alkalisiert ist.

4. Hülle nach Anspruch 1,wobei das Gewebe aus einem Mischgarn hergestellt ist, das aus einem mit Polyurethan-Polyethylenglykol-Blockcopolymer-Gummi (Spandex ®) kombinierten Polyestergarn besteht.

5. Hülle nach Anspruch 4, wobei in dem Gewebe abwechselnd Polyesterfilamente und Polyurethan-Polyethylenglykol-Blockcopolymerfäden (Spandex ®-Fäden) vorhanden sind.

6. Hülle nach einem der Ansprüche 1 bis 5, wobei das in Längsrichtung der Schlauchform verlaufende Kettgarn des Gewebes eine hohe Naßreißfestigkeit aufweist und das in Querrichtung zur Schlauchform verlaufende Schussgarn des Gewebes Dehn- und Schrumpffähigkeit aufweist.

## Claims

1. Casing for sausages or other meat products in tubular form, consisting of a fiber fabric,
**characterised in that** the casing consists of at least nearly 100 % synthetic fibers in the form of synthetic filament fibers made of polyester or polyamide, the surface of which is modified by crater-shaped bulges manufactured by means of alkalisation in the case of polyester fibers or by means of acid treatment in the case of polyamide fibers, so as to render the fabric absorptive for water and additives such as flavour enhancers, smoke flavourings, salts and the like.

2. Casing according to claim 1, wherein the filament yarns used in the fabric are configured as continuous filaments.

3. Casing according to claim 1 or 2, wherein the fabric consists of polyester fibers and is alkalised by means of caustic soda.

4. Casing according to claim 1, wherein the fabric is manufactured from a blended yarn that consists of a polyester yarn combined with polyurethane / polyethylene glycol block copolymer rubber (Spandex®).

5. Casing according to claim 4, wherein the fabric alternately includes polyester filaments and threads of polyurethane / polyethylene glycol block copolymer (Spandex ® threads).

6. Casing according to any one of claims 1 to 5, wherein the warp yarn of the fabric extending in the longitudinal direction of the tubular form presents high wet tenacity, and the weft yarn of the fabric extending in the transverse direction relative to the tubular form presents stretchability and shrinkability.

## Revendications

1. Enveloppe pour saucisse ou autre charcuterie en forme de tuyau, composée d'un tissu de fibres,
**caractérisée en ce que** l'enveloppe se compose au moins presque à 100 % de fibres synthétiques en forme de fibres de filaments synthétiques en polyester ou en polyamide, dont la surface est transformée par des saillies en forme de cratère obtenues par alcalisation dans le cas des fibres polyester, ou par traitement acide dans le cas des fibres polyamide, pour rendre le tissu réceptif à l'eau et à des additifs tels qu'exhausteurs de goût, arômes, sels ou analogues.

2. Enveloppe selon la revendication 1, dans laquelle les fils de filaments utilisés dans le tissu sont réalisés sous forme de filaments continus.

3. Enveloppe selon la revendication 1 ou 2, dans laquelle le tissu se compose de fibres de polyester et est alcalisé par soude caustique.

4. Enveloppe selon la revendication 1, dans laquelle le tissu est fabriqué à partir d'un fil mixte qui se compose d'un fil de polyester combiné avec de l'élastomère de polyuréthane-polyéthylèneglycol-copolymère bloc (Spandex®).

5. Enveloppe selon la revendication 4, dans laquelle le tissu contient tour à tour des filaments de polyester et des fils de polyuréthane-polyéthylèneglycol-copolymère bloc (fils Spandex®).

6. Enveloppe selon l'une des revendications 1 à 5, dans laquelle le fil de chaîne s'étendant longitudinalement à la forme de tuyau du tissu présente une haute résistance à la rupture au mouillé et le fil de trame s'étendant transversalement à la forme de tuyau du tissu présente une élasticité et une rétractabilité.
